# EUROPÄISCHE PATENTANMELDUNG

(11) **EP 3 527 056 A1**
(43) Veröffentlichungstag der Anmeldung: **21.08.2019**
(21) Anmeldenummer: 19150489.3
(22) Anmeldetag: 07.01.2019
(51) Int. Cl.: A01B 61/02, A01B 67/00, F16F 15/00

(54) **SYSTEM ZUM BETREIBEN EINES ANBAUGERÄTES ZUR VERÄNDERUNG EINES SCHWINGUNGSVERHALTENS DES ANBAUGERÄTES**

(30) Priorität: 15.02.2018 DE 102018202361
(71) Anmelder: Robert Bosch GmbH, 70442 Stuttgart (DE)
(72) Erfinder: Ochner, Benjamin, 70178 Stuttgart (DE)

(57) **Zusammenfassung**

Die Erfindung betrifft ein System (1) zum Betreiben eines Anbaugerätes (3) für eine Landwirtschaftsmaschine (2), wobei das System (1) das Anbaugerät (3) mit einem verstellbaren Maschinenelement (5) und einen Sensor (4) zum Erfassen einer Bewegung des Anbaugerätes (3) aufweist, das System (1) eine Auswertungseinheit (6), die in Abhängigkeit von zumindest einem mit dem Sensor (4) erfassten kinematischen Wert (22) des Anbaugerätes (3) zumindest einen Ausgangswert (21) ermittelt, und eine Ausgabeeinheit (7) zum Ausgeben des Ausgangswertes (21) aufweist, wobei der Ausgangswert (21) zumindest eine Information für eine Verstellung des Maschinenelementes (5) zur Veränderung eines Schwingungsverhaltens des Anbaugerätes (3) enthält.

## Beschreibung

Die vorliegende Erfindung betrifft ein System zum Betreiben Anbaugerätes für eine Landwirtschaftsmaschine, aufweisend das Anbaugerät mit zumindest einem verstellbaren Maschinenelement und einen Sensor zum Erfassen einer Bewegung des Anbaugerätes.

Ein derartiges System ist aus der DE 10 2013 222 154 A1 bekannt. Das darin beschriebene Anbaugerät ist über eine Zapfwelle mit der Landwirtschaftsmaschine verbunden. Um eine Überlastung der Landwirtschaftsmaschine oder des Anbaugerätes zu detektieren, ist eine Überwachungsvorrichtung mit einer elektronischen Sensoreinrichtung zum Erfassen von Schwingungen des Anbaugerätes vorgesehen, die an einem Anschluss der Zapfwelle angeordnet ist. Dadurch, dass mit der Überwachungsvorrichtung eine Überlastung der Landwirtschaftsmaschine erkannt werden kann, ist es möglich, auf eine Rutschkupplung zu verzichten.

Ausgehend hiervon ist es die Aufgabe der vorliegenden Erfindung, ein System für Landwirtschaftsmaschinen der gattungsmäßigen Art dahingehend weiter zu verbessern, dass das Anbaugerät effizienter genutzt werden kann.

Diese Aufgabe wird mit einem System mit den Merkmalen des Anspruches 1 und einem Verfahren mit den Merkmalen des Anspruches 9 gelöst. Vorteilhafte Ausgestaltungen des Systems und Weiterbildungen des Verfahrens sind Gegenstand der abhängigen Ansprüche.

Zur Lösung der Aufgabe wird ein System zum Betreiben eines Anbaugerätes für eine Landwirtschaftsmaschine vorgeschlagen. Das System weist das Anbaugerät mit einem verstellbaren Maschinenelement und einen Sensor zum Erfassen einer Bewegung des Anbaugerätes auf. Das vorgeschlagene System zeichnet sich dadurch aus, dass das System eine Auswertungseinheit, die in Abhängigkeit von zumindest einem mit dem Sensor erfassten kinematischen Wert des Anbaugerätes zumindest einen Ausgangswert ermittelt, und eine Ausgabeeinheit zum Ausgeben des Ausgangswertes aufweist, wobei der Ausgangswert zumindest eine Information für eine Verstellung des Maschinenelementes zur Veränderung eines Schwingungsverhaltens des Anbaugerätes enthält.

Das Anbaugerät ist vorzugsweise ein Gerät zur Bodenbearbeitung, wie beispielsweise ein Grubber. Das verstellbare Maschinenelement kann ein Hebelarm sein, der beispielsweise eine Eindringtiefe des Grubbers verändert. Das verstellbare Maschinenelement hat eine Masse, deren Schwerpunkt sich durch ein Verstellen des Maschinenelementes derart ändert, dass sich zumindest eine Eigenfrequenz des Anbaugerätes verändert. Dabei kann sich die Eigenfrequenz dadurch verändern, dass das Maschinenelement verstellt wird und/oder dass ein an das verstellbare Maschinenelement mechanisch gekoppeltes weiteres Maschinenelement relativ zu dem Anbaugerät beim Verstellen des Maschinenelementes bewegt wird. Dies ist z. B. dann der Fall, wenn eine Eindringtiefe des Grubbers ins Erdreich durch ein Verstellen des Maschinenelementes verändert wird.

Die Veränderung des Schwingungsverhaltens des Anbaugerätes umfasst vorzugsweise eine Veränderung zumindest einer Eigenfrequenz des Anbaugerätes. Das Schwingungsverhalten kann bevorzugt durch ein Frequenzspektrum beschrieben werden. Das vorgeschlagene System unterscheidet sich gegenüber in dem oben genannten Stand der Technik genannten System vor allem dadurch, dass der Ausgangswert zumindest eine Information für eine Verstellung des Maschinenelementes zur Veränderung des Schwingungsverhaltens des Anbaugerätes enthält, während in dem Stand der Technik eine Lösung zur Vermeidung einer Überlast beschrieben ist, bei welcher lediglich eine Fahrgeschwindigkeit des Landwirtschaftsfahrzeugs oder eine Motordrehzahl gesenkt wird. Wird gemäß dem Stand der Technik die Fahrgeschwindigkeit oder die Motordrehzahl gesenkt, so wird das Anbaugerät in einem veränderten Betriebspunkt betrieben. Eine Änderung des Schwingungsverhaltens des Anbaugerätes wird hingegen damit nicht erreicht.

Der kinematische Wert kann ein zurückgelegter Weg, eine aktuelle Geschwindigkeit und/oder eine Beschleunigung eines Teils des Anbaugerätes sein. Der Sensor kann als ein Beschleunigungssensor ausgebildet sein und an einem Rahmen des Anbaugerätes, an dem verstellbaren Maschinenelement oder an dem weiteren Maschinenteil angeordnet sein. Ist der Sensor in Form eines Beschleunigungssensors ausgebildet, hat dies den Vorteil, dass ausgehend von dem kinematischen Wert, d. h. in diesem Fall einem Beschleunigungswert, sehr einfach ein Frequenzspektrum, vorzugsweise mit Hilfe der Auswertungseinheit, ermittelt werden kann. Bevorzugt erfasst der Beschleunigungssensor Beschleunigungen in allen drei Raumrichtungen. Es hat sich als vorteilhaft erwiesen, dass die Auswertungseinheit entsprechende Frequenzspektren für alle drei Raumrichtungen erzeugt. Anhand des kinematischen Wertes, insbesondere anhand zumindest eines der Frequenzspektren, ist es möglich, mithilfe der Auswertungseinheit für einzelne Teile des Anbaugerätes, wie zum Beispiel für das Maschinenelement, einen Belastungswert zur Angabe einer Belastung des entsprechenden Teils und/oder einen aktuellen Betriebszustand des jeweiligen Teils oder des Anbaugerätes zu ermitteln und diesen in Form des Ausgangswertes auszugeben, insbesondere an die Ausgabeeinheit, weiterzuleiten.

In einer bevorzugten Ausführungsform ist daher vorgesehen, dass der Ausgangswert ein Belastungswert zur Angabe einer Belastung des Anbaugerätes ist. Dabei kann der Belastungswert ein quantitativer Wert, beispielsweise eine Amplitude oder eine Frequenz, oder ein qualitativer Wert, wie z. B. "schwach", "mittel" oder "stark" sein, um eine entsprechende schwache, mittlere beziehungsweise starke Belastung des Anbaugerätes oder des Teils des Anbaugerätes anzugeben. Vorteilhaft gibt die Ausgabeeinheit nicht nur den Ausgangswert, sondern auch einen Ausgangsdatensatz aus, der zumindest einen Teil des Anbaugerätes mit einem zugehörigen Belastungswert aufweist. Vorzugsweise gibt die Ausgabeeinheit mehrere Datensätze für mehrere Teile des Anbaugerätes aus.

Eine bevorzugte Variante sieht vor, dass die Ausgabeeinheit zumindest einen Bildschirm hat, von dem aus der Ausgangswert, insbesondere ein Ausgangsdatensatz, von einem Benutzer des Systems abgelesen werden kann. Hierbei dient ein qualitativer Ausgangswert zur schnellen Erfassung des aktuellen Betriebszustands des Anbaugerätes, insbesondere eines Teils des Anbaugerätes, so dass der Benutzer sehr schnell entscheiden kann, wie er das Anbaugerät anders betreiben kann. Ein qualitativer Ausgangswert hat für den Benutzer den Vorteil, dass er aus diesem Wert leichter ermitteln kann, wie er das Maschinenelement derart verstellt, dass ein optimierter Betriebszustand des Anbaugerätes erreicht wird. Dabei kann der optimierte Betriebszustand ein Betriebszustand sein, bei welchem das Anbaugerät geringer belastet und/oder effizienter, beispielsweise mit einem höheren Ernteertrag, betrieben wird. Somit kann mit dem vorgeschlagenen System das Anbaugerät effizienter genutzt werden.

So kann vorteilhaft der Ausgangswert ein Sollwert eines Parameters, der eine relative Position des Maschinenelementes in Bezug zu dem Anbaugerät beschreibt, im Folgenden Maschinenparameter genannt, sein. Anhand des mit der Ausgabeeinheit angezeigten Sollwertes kann der Benutzer das Maschinenelement gezielt verstellen, sodass ein aktueller Wert des Maschinenparameters leicht in Richtung des Sollwertes verändert werden kann.

Gemäß einer weiteren Ausgestaltung ist vorgesehen, dass der Ausgangswert ein zulässiger Wert des Maschinenparameters. Bevorzugt berechnet die Auswertungseinheit einen zulässigen Wertebereich des Maschinenparameters. Wird der zulässige Wert dem Benutzer mit der Ausgabeeinheit angezeigt, so kann der Benutzer entscheiden, wie er den aktuellen Wert des Maschinenparameters verändern möchte. Im Vergleich zu dem Sollwert ermöglicht der zulässige Wert, insbesondere der zulässige Wertebereich, dem Benutzer, den aktuellen Wert innerhalb des Wertebereiches nach seiner Einschätzung sinnvoll zu verändern. Diese Variante erlaubt damit einen Betrieb des Anbaugerätes, bei dem ein in der Auswertungseinheit gespeichertes Wissen in Form des Modells oder der Datenbank zusätzlich zu einem Expertenwissen des Benutzers genutzt werden kann.

Die Auswertungseinheit ist bevorzugt dazu eingerichtet, anhand des kinematischen Wertes, bevorzugt mehrerer kinematischer Werte vom Typ des kinematischen Wertes, den aktuellen Betriebszustand des Anbaugerätes zu bestimmen und in Abhängigkeit des aktuellen Betriebszustandes des Anbaugerätes den Sollwert und/oder den zulässigen Wert zu berechnen.

Die Ausgabeeinheit ist bevorzugt ein mobiles Endgerät, wie z. B. ein Smartphone, ein Cockpit-Instrument der Landwirtschaftsmaschine oder ein Computerbildschirm. Kann der Benutzer den Ausgangswert unmittelbar ablesen, hat dies den Vorteil, dass er unmittelbar in einen Betrieb der Landwirtschaftsmaschine eingreifen kann. In einer speziellen Variante kann das System ein Steuergerät aufweisen, wobei die Ausgabeeinheit den Ausgangswert an das Steuergerät sendet und das Steuergerät das Maschinenelement in Abhängigkeit von dem Ausgangswert verstellt. Hierbei ist es möglich, dass die Verstellung des Maschinenelementes vollautomatisch abläuft, ohne dass der Benutzer den Ausgangswert erfassen muss.

Es hat sich jedoch als besonders vorteilhaft erwiesen, wenn der Benutzer in einen Prozess eines Verstellens des Maschinenelementes eingreifen kann. Dies ist dadurch begründet, dass ein Boden, wie ein Acker, sehr unregelmäßig verläuft und ein vollautomatisches System nur sehr schwer alle möglichen Bodenbeschaffenheiten, insbesondere umwelt- und wetterabhängige Bodenbeschaffenheiten, berücksichtigen kann.

Zur Bestimmung des Ausgangswertes weist das System vorteilhaft eine Datenbank auf, in welcher Vergleichswerte gespeichert sind. Die Auswertungseinheit ist bei dieser Variante mit der Datenbank verbunden und führt einen Vergleich zwischen dem kinematischen Wert oder einem aus dem kinematischen Wert berechneten Wert und zumindest einem Vergleichswert durch und erzeugt anhand des Ergebnisses des Vergleiches den Ausgangswert. Die Vergleichswerte können hierbei in Form von Frequenzen oder Amplituden, die insbesondere einzelnen Teilen des Anbaugerätes zugeordnet werden können, ausgebildet sein. Auch ist es möglich, dass die Vergleichswerte kinematische Daten, wie z. B. eine maximale Höhe oder Tiefe, eine Geschwindigkeit oder eine Beschleunigung eines Teils des Anbaugerätes sind.

Bevorzugt sind die Vergleichswerte in Abhängigkeit von Umgebungswerten zur Beschreibung von Umwelteinflüssen bei einer Bearbeitung eines Ackerbodens abgespeichert. Dabei kann ein Umgebungswert beispielsweise eine Temperatur und/oder eine Feuchtigkeit einer Luft oder des Ackerbodens sein. Diese Ausgestaltung ermöglicht es, in Abhängigkeit von einer mit Hilfe eines Feuchtigkeitssensors des Systems gemessenen aktuellen Feuchtigkeit und/oder von einer mit einem Temperatursensor des Systems gemessenen aktuellen Temperatur einen aktuellen Umgebungswert zu bestimmen und in Abhängigkeit von dem aktuellen Umgebungswert die Vergleichswerte aus der Datenbank auszulesen. Diese Variante hat den Vorteil, dass der Ausgangswert an aktuelle Umgebungsbedingungen angepasst werden kann.

So ist es beispielsweise möglich, dass das System bei Frost und einer gemessenen Amplitude eines Teils des Anbaugerätes den Ausgangswert "mittel" erzeugt, während bei normalen sommerlichen Witterungsbedingungen und derselben gemessenen Amplitude des Teils die Auswertungseinheit "stark" als Ausgangswert ermittelt. Das vorgeschlagene System kann bei dieser Ausführungsform angepasst an Umwelteinflüsse reagieren und dem Benutzer in Abhängigkeit von diesen Umwelteinflüssen gezielt Informationen über den Betriebszustand des Anbaugerätes anzeigen.

Eine vorteilhafte Ausführungsform sieht vor, dass die Auswertungseinheit ein Modell aufweist, welches zumindest einen ersten funktionalen Zusammenhang zumindest zwischen dem kinematischen Wert als erstem Eingangswert des Modells und dem Ausgangswert beschreibt. Das Modell kann eine mathematische Funktion, wie z. B. eine Polynomfunktion, oder ein neuronales Netz sein. Dabei hat das Modell mehrere Parameter, wobei mittels einer Veränderung eines jeweiligen Wertes eines einzelnen Parameters der funktionale Zusammenhang veränderbar ist. Bevorzugt ist das Modell derart erzeugbar, dass der erste funktionale Zusammenhang die Informationen der in der Datenbank gespeicherten Vergleichswerte approximiert. So können beispielsweise die Vergleichswerte in Form von Trainingsdaten des neuronalen Netzes oder für eine Regressionsrechnung zur Bestimmung der Polynomfunktion verwendet werden.

Die Datenbank und/oder die Auswertungseinheit können in einer ersten Variante an, insbesondere innerhalb, des Anbaugerätes angeordnet sein. In einer zweiten Variante ist die Datenbank und/oder die Auswertungseinheit örtlich getrennt von dem Anbaugerät positioniert. Dies hat den Vorteil, dass die Datenbank oder die Auswertungseinheit einfach mit weiteren Sensoren von weiteren Anbaugeräten, insbesondere von weiteren Landwirtschaftsmaschinen, verbunden werden können. Auf diese Weise können mit Hilfe der mit den weiteren Sensoren erfassten weiteren kinematischen Werte zusätzliche Daten gesammelt werden können. Diese zusätzlichen Daten können derart verwendet werden, dass in der Datenbank eine höhere Anzahl von Vergleichswerten gespeichert werden kann und/oder das Modell mit einer größeren Anzahl von Vergleichswerten approximiert werden kann. In beiden Fällen ergibt sich eine höhere Genauigkeit des Systems.

In einer bevorzugten Weiterbildung des Modells beschreibt das Modell einen zweiten funktionalen Zusammenhang zumindest zwischen dem kinematischen Wert als ersten Eingangswert des Modells und dem aktuellen Umgebungswert als einen zweiten Eingangswert des Modells und dem Ausgangswert. Hierzu hat das System vorzugsweise einen zweiten Sensor, wie beispielsweise den Temperatur- oder Feuchtigkeitssensor, zum Erfassen des aktuellen Umgebungswertes. Der zweite Sensor kann auch in Form eines Magnetfeldsensors, insbesondere eines Kompass, ausgebildet sein. Der zweite Eingangswert kann in diesem Fall derart verwendet werden, um eine Fahrtrichtung des Anbaugerätes in Bezug zu einer bekannten Ausrichtung, in welcher der Ackerboden zuvor bearbeitet wurde, zu bestimmen.

Mithilfe des Modells kann im Vergleich zu der Datenbank der Ausgangswert unter Umständen genauer bestimmt werden, wenn der erste und/oder der zweite Eingangswert nicht in der Datenbank enthalten sind. Bei einer Verwendung der Datenbank müsste in diesem Fall der Ausgangswert mittels einer Interpolation erfolgen, während mit Hilfe des Modells der Ausgangswert durch den ersten oder zweiten funktionalen Zusammenhang berechnet, insbesondere approximiert, werden kann.

Eine besonders vorteilhafte Weiterbildung des Systems sieht vor, dass das System eine manuelle Eingabeschnittstelle zur Eingabe eines Überprüfungssignals hat, wobei die Auswertungseinheit das Modell in Abhängigkeit von dem Überprüfungssignal verändert. Das Überprüfungssignal kann durch den Benutzer vorzugsweise derart erzeugt werden, dass der Benutzer die manuelle Eingabeschnittstelle, beispielsweise einen Knopf, betätigt, wodurch das Überprüfungssignal an die Auswertungseinheit geleitet wird.

Besonders vorteilhaft erzeugt der Benutzer das Überprüfungssignal, wenn der Ausgangswert nach einem Urteil des Benutzers unpassend ist. Bei dieser Variante löscht die Auswertungseinheit vorzugsweise einen Eintrag oder einen Datensatz der Datenbank oder des Modells, auf dessen Basis der Ausgangswert berechnet wurde. Darüber hinaus ist es möglich, dass die Auswertungseinheit zu dem gelöschten Datensatz ähnliche Einträge beziehungsweise Datensätze der Datenbank oder des Modells ebenfalls löscht. Der Eintrag oder Datensatz können in der Datenbank gespeicherte Werte und/oder einzelne Werte von Parametern des Modells sein. Die manuelle Eingabeschnittstelle ermöglicht somit die Datenbank oder das Modell durch eine Eingabe eines Expertenwissens des Benutzers weiter zu verbessern beziehungsweise anzulernen.

Das Expertenwissen umfasst vor allem eine Einschätzung, wie stark das Anbaugerät in Abhängigkeit von aktuellen Umgebungsbedingungen belastet werden kann. Somit kann das System auch dann weiter verwendet werden, wenn beispielsweise das Anbaugerät ausgetauscht wird und ein ausgetauschtes Anbaugerät höheren Belastungen ausgesetzt werden darf. Hierzu ist die manuelle Eingabeschnittstelle bevorzugt derart ausgebildet, dass der Benutzer einen neuen Sollwert und/oder einen neuen zulässigen Wert als Überprüfungssignal eingeben kann. Die Auswertungseinheit speichert den neuen Sollwert und/oder zulässigen Wert vorzugweisen zusammen mit dem kinematischen Wert und bevorzugt mit dem aktuellen Umgebungswert, die der zweite Sensor aktuell erfasst, in Form eines neuen Datensatzes ab. Der neue Datensatz kann in der Datenbank gespeichert oder für die Regressionsrechnung oder das Training des neuronalen Netzes verwendet werden, um die Datenbank beziehungsweise das Modell zu verbessern, insbesondere an das neue Anbaugerät oder veränderte Umgebungsbedingungen anzupassen.

Zur Lösung der genannten Aufgabe wird weiterhin ein Verfahren zum Betreiben eines Systems, aufweisend ein Anbaugerät mit zumindest einem verstellbaren Maschinenelement, vorgeschlagen. Das Verfahren hat die folgenden Schritte. In einem ersten Schritt wird zumindest ein kinematischer Wert des Anbaugerätes mit einem Sensor erfasst. In einem zweiten Schritt, wird zumindest ein Ausgangswert anhand des kinematischen Wertes ermittelt, wobei der Ausgangswert eine Information für eine Verstellung des Maschinenelementes zur Veränderung eines Schwingungsverhaltens des Anbaugerätes enthält. In einem dritten Schritt wird der Ausgangswert an eine Ausgabeeinheit weitergeleitet.

Zur Lösung der genannten Aufgabe wird außerdem eine Verwendung eines Systems vorgeschlagen, wobei das System nach einer der oben beschriebenen Varianten ausgebildet sein kann. Die Verwendung sieht vor, dass der Sensor an einem Teil des Anbaugerätes montiert, zumindest der kinematische Wert des Anbaugerätes mit dem Sensor erfasst und zumindest der Ausgangswert anhand des kinematischen Wertes ermittelt wird, wobei der Ausgangswert eine Information für eine Verstellung des Maschinenelementes zur Veränderung eines Schwingungsverhaltens des Anbaugerätes enthält. Im Anschluss daran wird der Ausgangswert an die Ausgabeeinheit weitergeleitet.

Weitere, die Erfindung verbessernde Maßnahmen werden nachstehend gemeinsam mit der Beschreibung der bevorzugten Ausführungsbeispiele der Erfindung anhand von Figuren näher dargestellt.

Es zeigt:
- Figur 1: ein System zum Betreiben eines Anbaugerätes mit einer Auswertungseinheit;
- Figur 2: ein erstes Modell der Auswertungseinheit nach Figur 1;
- Figur 3: ein zweites Modell der Auswertungseinheit nach Figur 1;

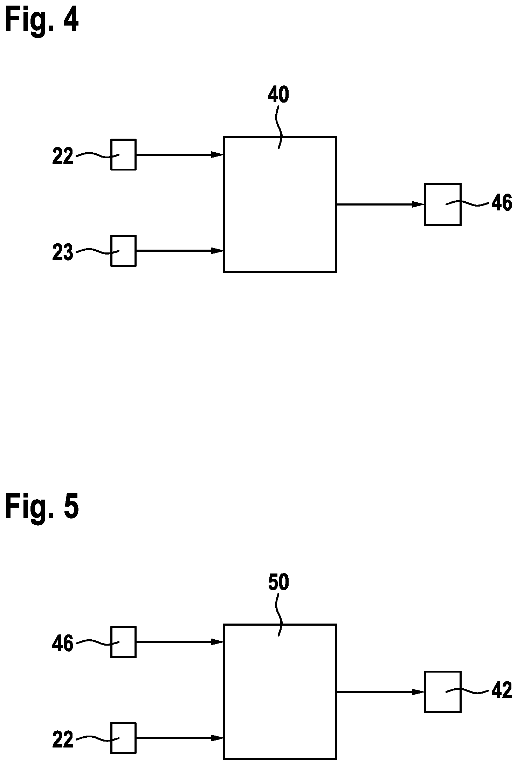

- Figur 4: ein erstes Modell der Auswertungseinheit nach Figur 1;
- Figur 5: ein erstes Modell der Auswertungseinheit nach Figur 1;
- Figur 6: ein Verfahren zum Betreiben des Systems nach Figur 1.

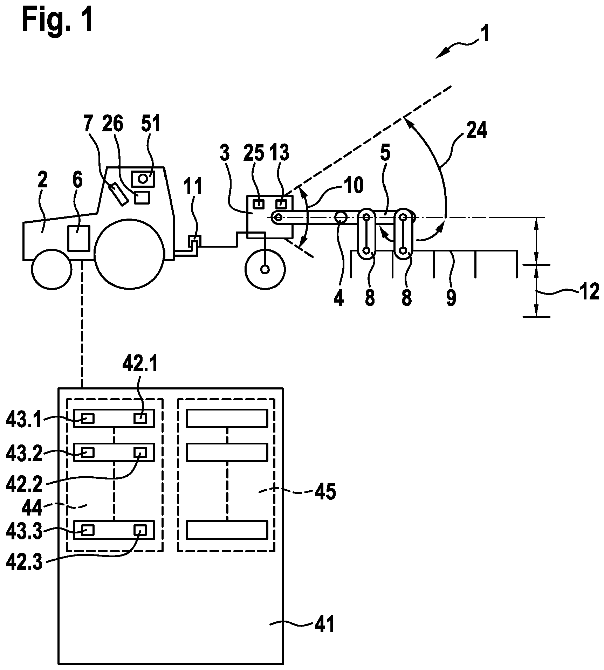

Fig. 1 zeigt ein System 1, aufweisend eine Landwirtschaftsmaschine 2 mit einem Anbaugerät 3 und einem Sensor 4 zum Erfassen einer Bewegung des Anbaugerätes 3. Das Anbaugerät 3 hat zumindest ein verstellbares Maschinenelement 5 und bevorzugt weitere Maschinenelemente 8, die an das verstellbare Maschinenelement 5 kinematisch gekoppelt sind. Die weiteren Maschinenelemente 8 sind in dem in Fig. 1 gezeigten Beispiel mit einem Zinkenhalter 9 kinematisch verbunden, wobei der Zinkenhalter 9 mehrere Zinken aufweist, mit denen ein Ackerboden bearbeitet werden kann.

Das verstellbare Maschinenelement 5 ist drehbar gelagert und kann innerhalb eines Winkelbereiches 10 geschwenkt werden. Die weiteren Maschinenelemente 8 sind derart mit dem verstellbaren Maschinenelement 5 gekoppelt, dass sie jeweils einen Winkel in Bezug zu dem verstellbaren Maschinenelement 5 einnehmen, der entsprechend von einem eingestellten Winkel 24 des verstellbaren Maschinenelementes 5 gegenüber einer horizontalen Ebene abhängt. Eine derartige mechanische Kopplung zwischen dem Maschinenelement 5 und den weiteren Maschinenelementen 8 kann beispielsweise durch ein in Fig. 1 nicht dargestelltes Koppelgetriebe realisiert sein. In Abhängigkeit des Winkels 24 senkt sich der Zinkenhalter 9 in eine durch eine Kinematik der Teile des Anbaugerätes vorgegebene Tiefe 12 in den Ackerboden.

Beim Verstellen des Maschinenelementes 5 bewegen sich sowohl ein Schwerpunkt des Maschinenelementes 5 als auch einzelne Schwerpunkte der weiteren Maschinenelemente 8 sowie ein Schwerpunkt des Zinkenhalters 9. Hierdurch entstehen je nach Winkellage des verstellbaren Maschinenelementes 5 unterschiedliche Hebelkräfte des Zinkenhalters 9 gegenüber dem verstellbaren Maschinenelement 5 als auch gegenüber einer Kupplung 11, welche das Anbaugerät 3 mit der Landwirtschaftsmaschine 2 verbindet. Die unterschiedlichen Hebelkräfte bewirken in einem Zusammenspiel mit jeweiligen Elastizitätsmodulen des verstellbaren Maschinenelementes 5 sowie der weiteren Maschinenelemente 8, dass je nach Winkellage des verstellbaren Maschinenelementes 5 einzelne Teile des Anbaugerätes 3 oder das Anbaugerät 3 selbst oder ein Teilsystem, wie z. B. ein Teilsystem aus dem verstellbaren Maschinenelement 5, den weiteren Maschinenelementen 8 und dem Zinkenhalter 9, jeweils unterschiedliche Eigenfrequenzen aufweisen. Je nach Winkellage des Maschinenelementes 8 ergibt sich somit ein unterschiedliches Schwingungsverhalten des Anbaugerätes 3.

Das System weist weiterhin eine Auswertungseinheit 6, die in Abhängigkeit von zumindest einem mit dem Sensor erfassten kinematischen Wert 22 des Anbaugerätes 3 zumindest einen Ausgangswert 21 ermittelt, und eine Ausgabeeinheit 7 zum Ausgeben des Ausgangswertes 21 auf. Der Ausgangswert 21 enthält zumindest eine Information für eine Verstellung des Maschinenelementes 5 zur Veränderung des Schwingungsverhaltens des Anbaugerätes 3.

Der Ausgangswert 21 kann gemäß einer ersten Variante ein Belastungswert 21.1 zur Angabe einer Belastung des Anbaugerätes 3, insbesondere eines Teils des Anbaugerätes 3, wie das Maschinenelement 5 oder der Zinkenhalter 9, sein. Nach einer zweiten Variante ist der Ausgangswert 21 in Form eines Sollwertes 21.2 oder eines zulässigen Wertes 21.3 eines Parameters ausgebildet, der eine relative Position des Maschinenelementes 5 in Bezug zu dem Anbaugerät beschreibt, im Folgenden Maschinenparameter genannt. Möglich ist, dass die Auswertungseinheit 6 mehr als einen Ausgangswert ermittelt und die Ausgabeeinheit diese ausgibt, wie zum Beispiel den Belastungswert 21.1, den Sollwert 21.2 und/oder den zulässigen Wert 21.3.

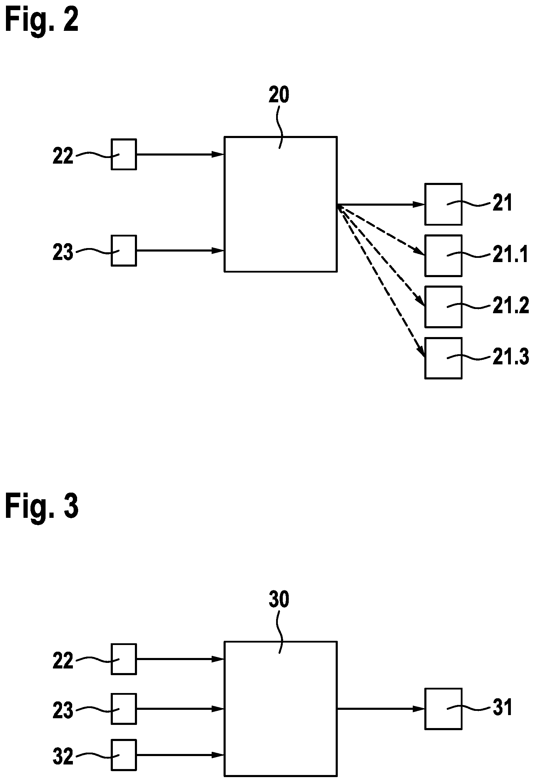

Um den Ausgangswert 21 berechnen zu können, hat die Auswertungseinheit 6 vorteilhaft ein erstes Modell 20, welches in Fig. 2 gezeigt ist. Das erste Modell 20 hat als ersten Eingangswert den mit dem Sensor 4 erfassten kinematischen Wert 22. Ein zweiter Eingangswert des Modells 20 ist in Form eines aktuellen Umgebungswertes 23, der mit einem zweiten Sensor 13, der beispielsweise ein Temperatursensor sein kann, gemessen wird, ausgebildet. Die Auswertungseinheit 6 berechnet mit Hilfe des ersten Modells 20 in Abhängigkeit von dem ersten Eingangswert 22 und dem zweiten Eingangswert 23 den Ausgangswert 21. Bevorzugt ist der Ausgangswert 21 ein Wert, der eine relative Position des verstellbaren Maschinenelementes 5 in Bezug zu dem Anbaugerät 3 angibt, beispielsweise einen Wert des Winkels 24 innerhalb des Winkelbereiches 10. Der Ausgangswert 21 wird vorzugshalber mit Hilfe der Ausgabeeinheit 7, die beispielsweise als ein Display ausgebildet ist, angezeigt.

Eine besondere Variante kann vorsehen, dass der Ausgangswert 21 an ein Steuergerät 25 des Systems 1 gesendet wird und mithilfe des Steuergerätes 25 das Maschinenelement 5 in Abhängigkeit des Ausgangswertes 21 einstellt. Jedoch ist es genauso möglich, dass ein Benutzer des Systems 1 eine erste Eingabeschnittstelle 26 bedient und manuell einen Befehl an das Steuergerät 25 zur Verstellung des Maschinenelementes 5 sendet.

Des Weiteren ist bevorzugt vorgesehen, dass ein in Fig. 3 gezeigtes zweites Modell 30 der Auswertungseinheit 6 in Abhängigkeit von dem kinematischen Wert 22, dem aktuellen Umgebungswert 23 und einem aktuellen Wert 32 des Maschinenparameters einen zweiten Ausgangswert 31 ermittelt. Der zweite Ausgangswert 31 kann beispielsweise qualitativ sein und eine Stärke einer Belastung des Anbaugerätes 3 angeben. Beispielsweise kann der zweite Ausgangswert 31 die Werte "schwach", "mittel" und/oder "stark" annehmen, um eine entsprechende schwache, mittlere bzw. starke Belastung anzugeben.

Der Ausgangswert 21 und/oder der zweite Ausgangswert 31 können mit Hilfe der Ausgabeeinheit sichtbar für den Benutzer des Systems angezeigt werden. In Abhängigkeit von zumindest einer der beiden Ausgangswerte 21, 31 kann der Benutzer das verstellbare Maschinenelement 5 derart verstellen, um entweder eine Schwingung des Anbaugerätes 3 zu reduzieren und/oder das Anbaugerät 3 effizienter zu betreiben.

Es ist beispielsweise möglich, dass dem Benutzer eine mittlere Belastung des Anbaugerätes 3 mit Hilfe des zweiten Ausgangswertes 31 angezeigt wird, beispielsweise indem der zweite Ausgangswert 31 gleich den Wert "mittel" annimmt und der Ausgangswert 21 in Form eines Sollwertes von dem aktuellen Wert 32, beispielsweise einem aktuellen Winkel 24, verschieden ist. In diesem Fall kann der Benutzer den aktuellen Winkel 24 dahingehend verändern, dass eine effizientere Benutzung des Anbaugerätes 3 möglich ist. Dabei orientiert sich der Benutzer an dem angezeigten Ausgangswert 21, d. h. der Benutzer verändert vorteilhafterweise den aktuellen Winkel 24 hin zu dem angezeigten Winkel, d. h. dem Ausgangswert 21. Bei dieser Variante wird mit Hilfe des kinematischen Wertes 22 eine Betriebssituation des Anbaugerätes 3 in Abhängigkeit von den Umgebungsdaten 23 erkannt und ein optimaler Sollwert des Maschinenparameters ausgegeben.

In einer vorteilhaften Ausgestaltung weist das System 1 eine Datenbank 41 auf, in welcher ein erster Vergleichswert 42.1, ein zweiter Vergleichswert 42.2 und ein dritter Vergleichswert 42.3 gespeichert sind. Die Vergleichswerte 42.1, 42.2, 42.3 geben vorzugsweise jeweils einen Sollwert des Maschinenparameters in Abhängigkeit von einem entsprechenden ersten kinematischen Wert 43.1, einem zweiten kinematischen Wert 43.2 bzw. einem dritten kinematischen Wert 43.3 an. Vorzugsweise ist ein jeweiliger kinematischer Wert zusammen mit einem Sollwert des Maschinenparameters in einem einzelnen Datensatz gespeichert. In einer besonderen Ausgestaltung ist die Datenbank 41 so ausgebildet, dass derartige Datensätze für jeweils verschiedene Umgebungswerte, beispielsweise Außentemperaturen, in der Datenbank 41 gespeichert sind. So kann die Datenbank 41 eine erste Datenbank 44 für einen ersten Temperaturbereich und eine zweite Datenbank 45 für einen zweiten vom ersten verschiedenen Temperaturbereich aufweisen. Dies hat den Vorteil, dass in Abhängigkeit des aktuellen Umgebungswertes 23 und einem gemessenen aktuellen kinematischen Wert 22 der Ausgangswert 21, bevorzugt in Form eines optimalen Sollwertes, beispielsweise mittels Interpolation zwischen den einzelnen Datensätzen, mit Hilfe der Auswertungseinheit 6 ermittelt werden kann.

Eine vorteilhafte Weiterbildung des Systems 1 sieht vor, dass die Auswertungseinheit 6 ein drittes Modell 40 hat, welches in Abhängigkeit zumindest des kinematischen Wertes 22, bevorzugt mehrere kinematischer Werte vom Typ des kinematischen Wertes 22, und dem aktuellen Umgebungswert 23 eine zulässige Vibrationscharakteristik 46, bevorzugt in Form eines Frequenzspektrums, ermittelt. Hierbei kann das dritte Modell 40 in Abhängigkeit der Werte 22 und 23 einen aktuellen Betriebszustand klassifizieren, d.h. den aktuellen Betriebszustand einem gespeicherten Bereich von einem oder einer Gruppe von mehreren zu dem aktuellen Betriebszustand ähnlichen Betriebszuständen zuordnen. Bei dieser Klassifizierung verändert eine geringe Veränderung des Wertes des Maschinenparameters ein Ergebnis der Klassifizierung bevorzugt nicht.

Es ist möglich, dass die zulässige Vibrationscharakteristik 46 einen zulässigen Wert für eine Schwingung, im Folgenden zulässiger Schwingungswert genannt, insbesondere eine Amplitude einer bestimmten Frequenz, insbesondere einer Eigenfrequenz, des Maschinenelementes 5 oder einem anderen Teil des Anbaugerätes 3 angibt, der niedriger als ein aktueller Wert der Schwingung des Maschinenelementes 5 beziehungsweise des anderen Teils ist. In diesem Fall würde das Anbaugerät 3 nicht optimal für den aktuellen Betriebszustand eingestellt sein. Dieser Fall kann vorteilhaft mit einem Vergleich der zulässigen Vibrationscharakteristik 46 mit dem aktuellen Wert der Schwingung des Maschinenelementes 5 oder des anderen Teils erkannt werden. Hierzu weist das System 1 vorzugsweise ein viertes Modell 50 auf, welches anhand der zulässigen Vibrationscharakteristik 46 und zumindest dem kinematischen Wert 22 einen Überwachungswert 42 ermittelt. Der Überwachungswert 42 ist vorzugsweise als qualitativer Wert ausgebildet und kann beispielsweise die Werte "gut" oder "schlecht" annehmen. Vorteilhaft zeigt die Ausgabeeinheit 7 den Überwachungswert 42 an, sodass mit dem Überwachungswert 42 eine weitere Möglichkeit bereitgestellt wird, dem Benutzer ein Signal zum Verstellen des Maschinenelementes 5 zu geben.

Mithilfe einer manuellen Eingabeschnittstelle 51 zur Eingabe eines Überprüfungssignals, kann der Benutzer das dritte Modell 40 oder das vierte Modell 50 verändern. Beispielsweise kann der Benutzer die manuelle Eingabeschnittstelle 51 betätigen, wenn nach seiner Beurteilung der Überwachungswert 42 nicht passend ist. In diesem Fall verändert die Auswertungseinheit 6 das dritte Modell 40 und/oder das vierte Modell 50 in Abhängigkeit des Überprüfungssignals nach einer der oben beschriebenen Varianten. Beispielsweise löscht die Auswertungseinheit 6 vorzugsweise einen Eintrag oder einen Datensatz, auf dessen Basis die zulässige Vibrationscharakteristik 46 berechnet wurde. Darüber hinaus ist es möglich, dass die Auswertungseinheit 6 zu dem gelöschten Datensatz ähnliche Einträge beziehungsweise Datensätze ebenfalls löscht.

Das erste Modell 20, das zweite Modell 30, dritte Modell 40 und das vierte Modell 50 können jeweils in Form einer Datenbank, eines Polynoms oder eines neuronales Netz oder einer Kombination dieser drei Funktionstypen ausgebildet sein.

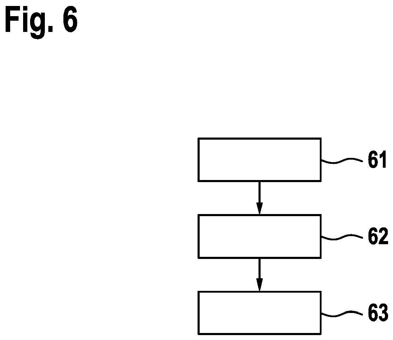

Fig. 6 zeigt einzelne Schritte eines Verfahrens zum Betreiben des Systems 1 mit den folgenden Schritten. In einem ersten Schritt 61 wird zumindest der kinematische Wert 22 des Anbaugerätes 3 mit dem Sensor 4 erfasst. In einem zweiten Schritt 62 wird zumindest der Ausgangswert 21 anhand des kinematischen Wertes 22 erzeugt, wobei der Ausgangswert 21 eine Information für eine Verstellung des Maschinenelementes 5 zur Veränderung des Schwingungsverhaltens des Anbaugerätes 3 enthält. In einem dritten Schritt 63 wird der Ausgangswert 21 an die Ausgabeeinheit 7 weitergeleitet.

## Patentansprüche

1. System (1) zum Betreiben eines Anbaugerätes (3) für eine Landwirtschaftsmaschine (2), wobei das System (1) das Anbaugerät (3) mit einem verstellbaren Maschinenelement (5) und einen Sensor (4) zum Erfassen einer Bewegung des Anbaugerätes (3) aufweist,
**dadurch gekennzeichnet, dass** das System (1) eine Auswertungseinheit (6), die in Abhängigkeit von zumindest einem mit dem Sensor (4) erfassten kinematischen Wert (22) des Anbaugerätes (3) zumindest einen Ausgangswert (21) ermittelt, und eine Ausgabeeinheit (7) zum Ausgeben des Ausgangswertes (21) aufweist, wobei der Ausgangswert (21) zumindest eine Information für eine Verstellung des Maschinenelementes (5) zur Veränderung eines Schwingungsverhaltens des Anbaugerätes (3) enthält.

2. System (1) nach Anspruch 1,
**dadurch gekennzeichnet, dass** der Ausgangswert (21) ein Belastungswert (21.1) zur Angabe einer Belastung des Anbaugerätes (3) ist.

3. System (1) nach Anspruch 1,
**dadurch gekennzeichnet, dass** der Ausgangswert (21) ein Sollwert (21.2) oder ein zulässiger Wert (21.3) eines Parameters ist, der eine relative Position des Maschinenelementes (5) in Bezug zu dem Anbaugerät (3) beschreibt.

4. System (1) nach einem der vorhergehenden Ansprüche,
**dadurch gekennzeichnet, dass** das System (1) eine Datenbank (41) aufweist, in welcher Vergleichswerte gespeichert sind, die Auswertungseinheit (6) mit der Datenbank (41) verbunden ist und einen Vergleich zwischen dem kinematischen Wert (22) oder einem aus dem kinematischen Wert (22) berechneten Wert und zumindest einem Vergleichswert durchführt und anhand eines Ergebnisses des Vergleiches den Ausgangswert (21) erzeugt.

5. System (1) nach einem der vorhergehenden Ansprüche,
**dadurch gekennzeichnet, dass** die Auswertungseinheit (6) ein Modell (20) aufweist, welches zumindest einen ersten funktionalen Zusammenhang zumindest zwischen dem kinematischen Wert (22) als ersten Eingangswert des Modells (20) und dem Ausgangswert (21) beschreibt.

6. System (1) nach einem der vorhergehenden Ansprüche,
**dadurch gekennzeichnet, dass** das System (1) eine manuelle Eingabeschnittstelle (51) zur Eingabe eines Überprüfungssignals hat, wobei die Auswertungseinheit (6) das Modell (20) in Abhängigkeit des Überprüfungssignals verändert.

7. System (1) nach einem der vorhergehenden Ansprüche,
**dadurch gekennzeichnet, dass** das System (1) einen zweiten Sensor (13) zum Erfassen von zumindest eines Umgebungswertes (23) hat und die Auswertungseinheit (6) den Ausgangswert (21) in Abhängigkeit des Umgebungswertes (23) erzeugt.

8. System (1) nach einem der Ansprüche 4 bis 7,
**dadurch gekennzeichnet, dass** die Auswertungseinheit (6) den Vergleich in Abhängigkeit des Umgebungswertes (23) durchführt.

9. Verfahren zum Betreiben eines Systems (1) mit einem Anbaugerät (3) für eine Landwirtschaftsmaschine (2), wobei das Anbaugerät (3) zumindest ein verstellbares Maschinenelement (5) aufweist, mit den folgenden Schritten:
- Erfassen zumindest eines kinematischen Wertes (22) des Anbaugerätes (3) mit einem Sensor (4),
- Ermitteln zumindest eines Ausgangswertes (21) anhand des kinematischen Wertes (22), wobei der Ausgangswert (21) eine Information für eine Verstellung des Maschinenelementes (5) zur Veränderung eines Schwingungsverhaltens des Anbaugerätes (3) enthält,
- Weiterleiten des Ausgangswertes (21) an eine Ausgabeeinheit (7).

10. Verwendung eines Systems (1) nach einem der Ansprüche 1 bis 8, wobei der Sensor (4) an ein Teil des Anbaugerätes (3) montiert wird, zumindest ein kinematischer Wert des Anbaugerätes (3) mit dem Sensor (4) erfasst wird, zumindest ein Ausgangswert (21) anhand des kinematischen Wertes (22) ermittelt wird, wobei der Ausgangswert (21) eine Information für eine Verstellung des Maschinenelementes (5) zur Veränderung eines Schwingungsverhaltens des Anbaugerätes (3) enthält, und der Ausgangswert (21) an die Ausgabeeinheit (7) weitergeleitet wird.
